# EUROPÄISCHE PATENTSCHRIFT

(11) **EP 3 299 222 B1**
(45) Veröffentlichungstag und Bekanntmachung des Hinweises auf die Patenterteilung: **06.11.2019**
(21) Anmeldenummer: 17192287.5
(22) Anmeldetag: 21.09.2017
(51) Int. Cl.: B60R 16/02

(54) **VERBESSERTE TÜLLENEINKNÜPFGEOMETRIE ZUR LEITUNGSABSTÜTZUNG**
IMPROVED SNAP-IN GROMMET GEOMETRY FOR CONDUIT SUPPORT
GÉOMÉTRIE D'ISOLATION DE TUBE AMÉLIORÉE POUR SUPPORT DE CONDUIT

(30) Priorität: 22.09.2016 DE 102016117902
(43) Veröffentlichungstag der Anmeldung: 28.03.2018
(73) Patentinhaber: Hirschmann Automotive GmbH, 6830 Rankweil-Brederis (AT)
(72) Erfinder: Lorenz, Steffen, 6830 Rankweil/Brederis (AT); Jäger, Günter, 6840 Götzis (AT)
(74) Vertreter: Greif, Thomas

(56) Entgegenhaltungen:
- EP-B1- 2 069 167
- DE-A1- 4 233 472
- DE-U- 1 925 877
- JP-A- 2013 183 498
- JP-U- S55 169 017

## Beschreibung

Die Erfindung betrifft eine Befestigungsanordnung mit einer Tülle, die an einem Befestigungselement festgelegt werden soll, wobei die Tülle zwei gegenüberliegende beabstandete Flansche aufweist, die zur Anlage an die Oberfläche des Befestigungselementes kommen, wenn die Tülle dort festgelegt worden ist, gemäß den Merkmalen des Oberbegriffes des Patentanspruches 1.

Aus der EP 2 069 167 B1 ist eine Befestigungseinrichtung für eine Leitung, insbesondere für ein elektrisches Kabel in einem Kraftfahrzeug bekannt, mit einer in einem Halter arretierbaren, die Leitung wenigstens teilweise umschließenden Tülle aus elastisch verformbarem Material, welche mittels einer Tüllenkontur in einer Aussparung des Halters lösbar befestigt ist, wobei die Tülle aus Kunststoff gespritzt und die Oberfläche der Tüllenkontur segmentiert und nutförmig ausgebildet ist mit zahnartigen Erhebungen an einem Nutgrund.

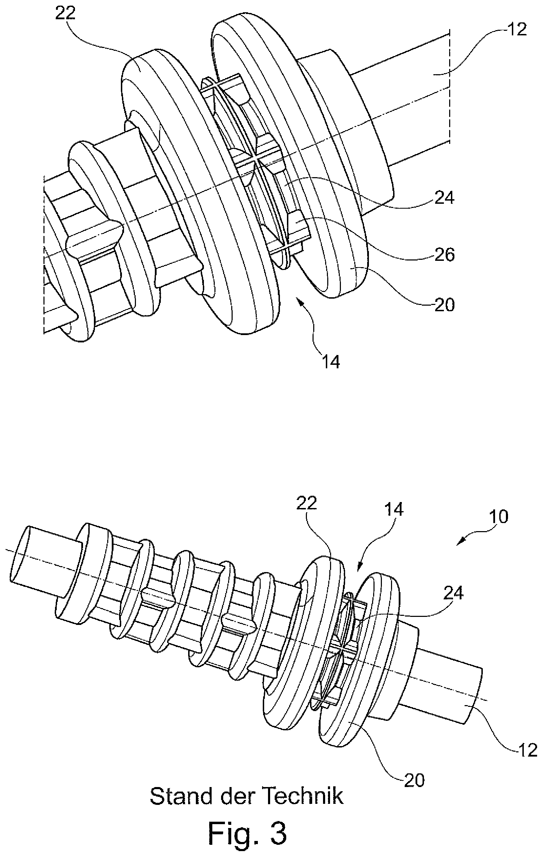

Die Figur 3 nebst zugehöriger Beschreibung dieses europäischen Patentes offenbart ein elektrisches Kabel 12, auf welches eine Tülle 10 ausgebracht ist. Die Tüllenkontur 14 ist nutförmig ausgebildet mit zahnartigen Erhebungen 26 an einem Nutgrund 24, wobei der Nutgrund 24 von der Tülle 10 gebildet ist. Das bedeutet, dass die Tüllenkontur 14 zwischen den beiden Flanschen 20, 22 durchgehend ohne Unterbrechungen ausgebildet ist, wobei dieser durchgängige Bereich zwischen den beiden Flanschen 20, 22 den Nutgrund der Tüllenkontur bildet. Ausgehend von diesem von der Tülle selber gebildeten Nutgrund erstrecken sich die Erhebungen für die beschriebene Festlegung der Tülle in dem Befestigungselement. Das bedeutet, dass die in Richtung des Kabels weisenden Flächen der beiden Flansche sowie die in die gleiche Richtung weisende Fläche des Nutgrundes eine geschlossene durchgehende Fläche bilden, die auf dem Kabel, genauer dessen Kabelmantel, aufliegen, wenn die Tülle auf das Kabel aufgeschoben worden ist.

Das Vorhandensein eines durchgehenden Bereiches (durchgehende Fläche) von Tüllenmaterial zwischen den beiden Flanschen führt zu einer Erhöhung der Befestigungskräfte, wenn die Tülle in dem Befestigungselement eingesetzt werden soll, da trotz Verwendung von elastischem Material für die Tülle keine ausreichend hohe Flexibilität zur Verfügung steht. Außerdem wird durch diesen durchgehenden Bereich der Tüllenkontur zwischen den beiden Flanschen das Gewicht der gesamten Tülle in unnötiger Weise erhöht, genauso wie der Materialeinsatz für die Realisierung der Tülle selber.

Durch die Erfindung sollen die eingangs beschriebenen Nachteile vermieden werden.

Dies wird durch die Merkmale des Patentanspruches 1 erreicht.

Erfindungsgemäß ist eine Tülleneinknüpfgeometrie zur Leitungsabstützung vorgesehen, bei der eine Materialaussparung zwischen den beiden Flanschen vorgesehen ist. Die Tülle ist zur Festlegung an dem Befestigungselement dadurch realisiert, dass die beiden Flansche, die zur Anlage an das Befestigungselement nach der Montage kommen, durch mindestens einen Verbindungssteg, vorzugsweise mehrere Verbindungsstege, miteinander verbunden sind. Zwischen den Verbindungsstegen ist eine Materialaussparung vorhanden, so dass Freiräume zwischen den beiden Flanschen bis in Richtung des Kabelmantels der elektrischen Leitung gegeben sind. Die Aussparung ist somit in radialer Ausrichtung von außen in Richtung des elektrischen Kabels durchgehend vorhanden. Es ist somit keine umlaufende Nut und folglich auch kein umlaufender oder teilweise gegebener Nutgrund vorhanden. Lediglich der in Richtung des elektrischen Kabels weisende Endbereich des zumindest einen Verbindungssteges kommt zur Anlage an das Kabel, insbesondere dessen Kabelmantel. Durch diese Freiräume zwischen den beiden Flanschen zwischen den vorzugsweise mehreren Verbindungsstegen wird das Material der Tülle in vorteilhafter Weise reduziert, genauso wie die Kräfte, die erforderlich sind, wenn die Tülle in die Öffnung des Befestigungselementes eingesetzt werden soll.

In Weiterbildung der Erfindung ist vorgesehen, dass umlaufend zwischen den beiden Flanschen vier oder sechs Verbindungsstege angeordnet sind. Wie schon ausgeführt führt im Stand der Technik das Vorhandensein eines durchgehenden Bereiches (durchgehende Fläche) von Tüllenmaterial zwischen den beiden Flanschen zu einer Erhöhung der Befestigungskräfte, wenn die Tülle in dem Befestigungselement eingesetzt werden soll, da trotz Verwendung von elastischem Material für die Tülle keine ausreichend hohe Flexibilität zur Verfügung steht. Außerdem wird durch diesen durchgehenden Bereich der Tüllenkontur zwischen den beiden Flanschen das Gewicht der gesamten Tülle in unnötiger Weise erhöht, genauso wie der Materialeinsatz für die Realisierung der Tülle selber. Andererseits sollen die Montagekräfte nicht zu hoch und Gewicht gespart werden bei gleichzeitig ausreichend hohen Haltekräften der Tülle auf dem Kabel, um diese dauerhaft und möglichst unverschiebbar auf dem Kabel festzulegen. Für die Erreichung dieses Ziel bieten vier oder sechs Verbindungsstegen einen guten Kompromiss, da einerseits mittels der Aussparung nach der Erfindung Material gespart wird und die Montagekräfte reduziert werden, gleichzeitig durch die radial in Richtung des Kabels weisenden Flächen der vier oder sechs Verbindungsstege die Tülle dauerhaft und nahezu oder vollständig unverschiebbar auf dem Kabel festgelegt wird.

In Weiterbildung der Erfindung ist vorgesehen, dass zwischen den beiden Flanschen zumindest ein Parallelsteg angeordnet ist, der über den zumindest einen Verbindungssteg, vorzugsweise mehrere Verbindungsstege, mit den beiden Flanschen verbunden ist. Diesbezüglich gilt das Gleiche, wie zuvor schon bezüglich der Verbindungsstege, die die Aussparung(en) bildet, ausgeführt.

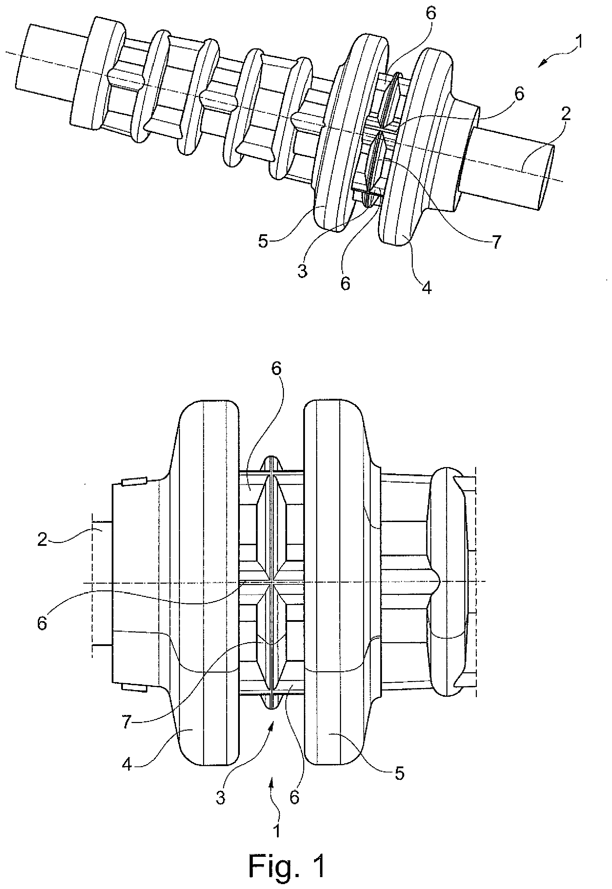

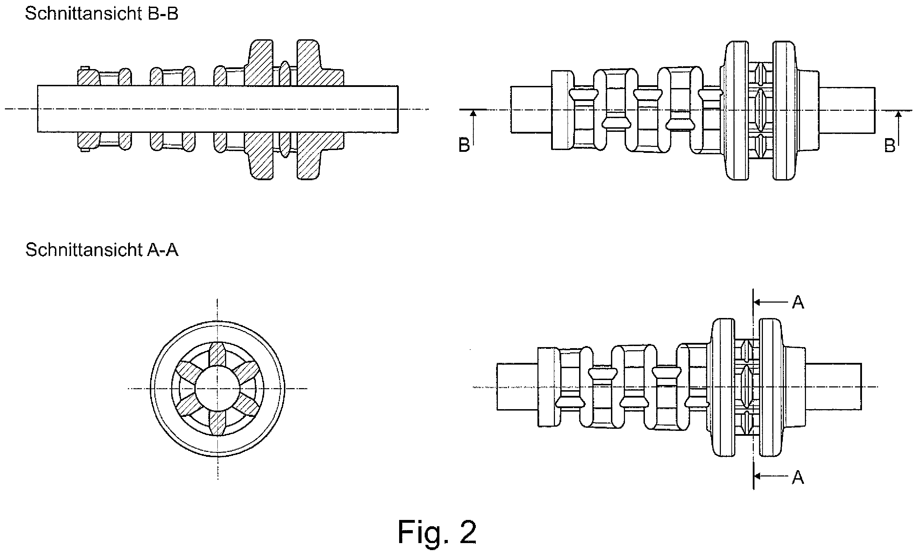

Die drei Figuren zeigen einmal den Stand der Technik (Figur 3) und in zwei Darstellungen die erfindungsgemäße Idee (Figuren 1 und 2).

Bei der den Stand der Technik beschreibenden und zeigenden Figur 3 ist erkennbar, dass die Tülle 10 zwei Flansche 20, 22 aufweist, die vollumfänglich und durchgehend miteinander verbunden sind, wobei dieser durchgehende Verbindungsbereich einen Nutgrund 24 bildet (siehe auch Figur 3 des Standes der Technik). Von diesem Nutgrund 24 aus erstrecken sich radial verlaufend zahnartige Erhebungen 26.

Die Figur 2 (dreidimensional) und die Figur 3 (Strichdarstellung) zeigen die erfindungsgemäße Lösung, wobei bei dieser neuen Tülle 1, die analog zu der aus dem Stand der Technik bekannten Tülle auf einem elektrischen Kabel 2 festgelegt wird, eine Tüllengeometrie 3 und zwei Flansche 4, 5 vorhanden sind, die über zumindest einen Verbindungssteg 6, vorzugsweise mehrere Verbindungsstege 6 (wie in dem Ausführungsbeispiel dargestellt), unter Realisierung von Materialaussparungen zwischen den Stegen verbunden sind. Bei dieser Variante gibt es keinen Nutgrund, von dem aus sich zahnartige Erhebungen aus erstrecken können. Die Aussparung erstreckt sich, seitlich begrenzt von den beiden Flanschen 4, 5 sowie dem zumindest einen Verbindungssteg 6, radial von außen durchgehend in Richtung des elektrischen Kabels 2.

Außerdem ist erkennbar, dass zwischen den beiden Flanschen 4, 5 zumindest ein Parallelsteg 7 angeordnet ist, der über den zumindest einen Verbindungssteg 6, vorzugsweise mehrere Verbindungsstege 6, mit den beiden Flanschen 4, 5 verbunden ist.

### Bezugszeichenliste

- 10.: Tülle
- 12.: Elektrisches Kabel
- 14.: Tüllenkontur
- 20.: Flansch
- 22.: Flansch
- 24.: Nutgrund
- 26.: Zahnartige Erhebung

- 1.: Tülle
- 2.: Elektrisches Kabel
- 3.: Tüllengeometrie
- 4.: Flansch
- 5.: Flansch
- 6.: Verbindungssteg
- 7.: Parallelsteg

## Patentansprüche

1. Befestigungsanordnung mit einer Tülle (1), die an einem Befestigungselement festgelegt werden soll, wobei die Tülle (1) zwei gegenüberliegende beabstandete Flansche (4, 5) aufweist, die zur Anlage an die Oberfläche des Befestigungselementes kommen, wenn die Tülle (1) dort festgelegt worden ist, **dadurch gekennzeichnet dass** die beiden Flansche (4, 5) unter Bildung von Aussparungen durch zumindest einen Verbindungssteg (6), vorzugsweise mehrere Verbindungsstege (6), miteinander verbunden sind.

2. Befestigungsanordnung nach Anspruch 1, **dadurch gekennzeichnet, dass** umlaufend zwischen den beiden Flanschen (4, 5) vier oder sechs Verbindungsstege (6) angeordnet sind.

3. Befestigungsanordnung nach Anspruch 1 oder 2, **dadurch gekennzeichnet, dass** zwischen den beiden Flanschen (4, 5) zumindest ein Parallelsteg (7) angeordnet ist, der über den zumindest einen Verbindungssteg (6), vorzugsweise mehrere Verbindungsstege (6), mit den beiden Flanschen (4, 5) verbunden ist.

## Claims

1. Fastening arrangement having a grommet (1) which is to be fixed to a fastening element, wherein the grommet (1) has two mutually opposite, spaced-apart flanges (4, 5) which come into contact with the surface of the fastening element when the grommet (1) has been fixed there, **characterized in that** the two flanges (4, 5) are connected to one another, so as to form apertures, by means of at least one connecting web (6), preferably multiple connecting webs (6).

2. Fastening arrangement according to claim 1, **characterized in that** four or six connecting webs (6) are arranged in encircling fashion between the two flanges (4, 5).

3. Fastening arrangement according to Claim 1 or 2, **characterized in that**, between the two flanges (4, 5), there is arranged at least one parallel web (7) which is connected to the two flanges (4, 5) via the at least one connecting web (6), preferably multiple connecting webs (6) .

## Revendications

1. Dispositif de fixation comprenant une douille (1) destinée à être fixée à un élément de fixation, la douille (1) comportant deux brides espacées (4, 5) opposées l'une à l'autre qui viennent en appui sur la surface de l'élément de fixation lorsque la douille (1) a été fixée à cet endroit, **caractérisée en ce que** les deux brides (4, 5) sont reliées entre elles par au moins une nervure de liaison (6), de préférence une pluralité de nervures de liaison (6), en formant des évidements.

2. Dispositif de fixation selon la revendication 1, **caractérisé en ce que** quatre ou six nervures de liaison (6) sont disposées circonférentiellement entre les deux brides (4, 5).

3. Dispositif de fixation selon la revendication 1 ou 2, **caractérisé en ce qu'**au moins une nervure parallèle (7) est disposée entre les deux brides (4, 5), laquelle nervure parallèle est reliée aux deux brides (4, 5) par l'intermédiaire de l'au moins une nervure de liaison (6), de préférence de plusieurs nervures de liaison (6) .
